# EUROPEAN PATENT APPLICATION

(11) **EP 3 690 778 A1**
(43) Date of publication of application: **05.08.2020**
(21) Application number: 18885101.8
(22) Date of filing: 17.08.2018
(51) Int. Cl.: G06Q 20/08

(54) **RESOURCE TRANSFER VERIFICATION METHOD AND APPARATUS, AND ELECTRONIC PAYMENT VERIFICATION METHOD AND APPARATUS**

(30) Priority: 04.12.2017 CN 201711257154
(71) Applicant: Alibaba Group Holding Limited, Grand Cayman (KY)
(72) Inventor: HU, Zongwang, Hangzhou, Zhejiang 311121 (CN)
(74) Representative: Goddar, Heinz J.
(86) International application number: PCT/CN2018/101066
(87) International publication number: WO 2019/109665

(57) **Abstract**

The present specification discloses a resource transfer verification method and apparatus, and an electronic payment verification method and apparatus. The method includes: receiving a resource transfer request that is sent by a resource transferor and that is used for requesting transfer of resources of the resource transferor to a resource transferee, further determining verification information used for indicating that the transfer succeeds after resources of the resource transferor are transferred to the resource transferee according to the resource transfer request, and transmitting a resource transfer result including the verification information to the resource transferor, so that the resource transferee can accurately determine, according to the verification information, whether the transfer is completed when the resource transferor shows the resource transferee the resource transfer result, thereby effectively avoiding the omission of the resource transfer.

## Description

### TECHNICAL FIELD

The present specification relates to the field of Internet technologies, and, in particular, to a resource transfer verification method and apparatus, and an electronic payment verification method and apparatus.

### BACKGROUND

With the development of Internet technology and the popularity of smart terminal devices, resource transfers in daily life become increasingly more common. In the existing resource transfer scheme, after the resource transfer is completed, a resource transferor may show a resource transfer result page in a smart terminal device to a resource transferee, so that the resource transferee confirms that the resource transfer succeeds according to the transfer result page.

However, if the resource transferor does not transfer the resource to the resource transferee, but shows the resource transferee a resource transfer result page previously stored in the smart terminal device, the resource transferee cannot discern whether the displayed resource transfer result page is a resource transfer result page corresponding to the transfer, which may result in the resource transferor getting away with transferring resources.

### SUMMARY

Embodiments of the present specification provide a resource transfer verification method and apparatus, and an electronic payment verification method and apparatus, to avoid omission of a resource transfer.

The following technical solutions are employed in the embodiments of the present specification.

An embodiment of the present specification provides a resource transfer verification method, applied to a server and including:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result including the verification information to the resource transferor.

An embodiment of the present specification further provides a resource transfer verification method, applied to a resource transferor and including:
sending a resource transfer request to a server, the resource transfer request being used for requesting transfer of resources of the resource transferor to a resource transferee; and
receiving a resource transfer result that includes verification information and that is transmitted by the server, the verification information being determined by the server after the resources of the resource transferor are transferred to the resource transferee according to the resource transfer request, and the verification information being used for indicating that the transfer succeeds.

An embodiment of the present specification further provides a resource transfer verification method, applied to a resource transferee and including:
setting a personalized code; and
sending the personalized code to a server to enable the server to determine the personalized code as verification information after resources of a resource transferor are transferred to the resource transferee, the verification information being used for indicating that the transfer succeeds.

An embodiment of the present specification further provides an electronic payment verification method, applied to a server and including:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result including the verification information to the payer.

An embodiment of the present specification further provides an electronic payment verification method, applied to a payer and including:
sending a payment request to a server, the payment request being configured to request an electronic payment to a payee; and
receiving a payment result that includes verification information and that is transmitted by the server, the verification information being determined by the server after completing the electronic payment from the payer to the payee according to the payment request, and the verification information being used for indicating that the electronic payment succeeds.

An embodiment of the present specification further provides an electronic payment verification method, applied to a payee and including:
setting a personalized code; and
sending the personalized code to a server to enable the server to determine the personalized code as verification information after completing an electronic payment from a payer to the payee, the verification information being used for indicating that the electronic payment succeeds.

An embodiment of the present specification further provides a resource transfer verification apparatus, applied to a server and including:
a receiving module configured to receive a resource transfer request sent by a resource transferor, the resource transfer request being used for requesting transfer of resources of the resource transferor to a resource transferee;
a determining module configured to determine verification information of the transfer after the resources of the resource transferor are transferred to the resource transferee according to the resource transfer request, the verification information being used for indicating that the transfer succeeds; and
a transmitting module configured to transmit a resource transfer result including the verification information to the resource transferor.

An embodiment of the present specification further provides a resource transfer verification apparatus, applied to a server and including:
a memory storing a program; and
a processor executing a program stored in the memory to perform operations including:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result including the verification information to the resource transferor.

An embodiment of the present specification further provides a computer-readable storage medium, the computer-readable storage medium storing one or more program instructions that, when executed by an electronic device including a plurality of application programs, cause the electronic device to perform operations including:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result including the verification information to the resource transferor.

An embodiment of the present specification further provides a resource transfer verification apparatus, applied to a resource transferor and including:
a sending module configured to send a resource transfer request to a server, the resource transfer request being used for requesting transfer of resources of the resource transferor to a resource transferee; and
a receiving module configured to receive a resource transfer result that includes verification information and that is transmitted by the server, the verification information being determined by the server after the resources of the resource transferor are transferred to the resource transferee according to the resource transfer request, and the verification information being used for indicating that the transfer succeeds.

An embodiment of the present specification further provides a resource transfer verification apparatus, applied to a resource transferor and including:
a memory storing a program; and
a processor executing a program stored in the memory to perform operations including:
   sending a resource transfer request to a server, the resource transfer request being used for requesting transfer of resources of the resource transferor to a resource transferee; and
   receiving a resource transfer result that includes verification information and that is transmitted by the server, the verification information being determined by the server after the resources of the resource transferor are transferred to the resource transferee according to the resource transfer request, and the verification information being used for indicating that the transfer succeeds.

An embodiment of the present specification further provides a computer-readable storage medium, the computer-readable storage medium storing one or more program instructions that, when executed by an electronic device including a plurality of application programs, cause the electronic device to perform operations including:
sending a resource transfer request to a server, the resource transfer request being used for requesting transfer of resources of the resource transferor to a resource transferee; and
receiving a resource transfer result that includes verification information and that is transmitted by the server, the verification information being determined by the server after the resources of the resource transferor are transferred to the resource transferee according to the resource transfer request, and the verification information being used for indicating that the transfer succeeds.

An embodiment of the present specification further provides a resource transfer verification apparatus, applied to a resource transferee and including:
a setting module configured to set a personalized code; and
a sending module configured to send the personalized code to a server to enable the server to determine the personalized code as verification information after resources of a resource transferor are transferred to the resource transferee, the verification information being used for indicating that the transfer succeeds.

An embodiment of the present specification further provides a resource transfer verification apparatus, applied to a resource transferee and including:
a memory storing a program; and
a processor executing a program stored in the memory to perform operations including:
   setting a personalized code; and
   sending the personalized code to a server, so that the server determines the personalized code as verification information after resources of a resource transferor are transferred to the resource transferee, the verification information being used for indicating that the transfer succeeds.

An embodiment of the present specification further provides a computer-readable storage medium, the computer-readable storage medium storing one or more program instructions that, when executed by an electronic device including a plurality of application programs, cause the electronic device to perform operations including:
setting a personalized code; and
sending the personalized code to a server to enable the server to determine the personalized code as verification information after resources of a resource transferor are transferred to the resource transferee, the verification information being used for indicating that the transfer succeeds.

An embodiment of the present specification further provides an electronic payment verification apparatus, applied to a server and including:
a receiving module configured to receive a payment request sent by a payer, the payment request being configured to request an electronic payment to a payee;
a determining module configured to determine verification information of the electronic payment after completing the electronic payment from the payer to the payee according to the payment request, the verification information being used for indicating that the electronic payment succeeds; and
a transmitting module configured to transmit a payment result including the verification information to the payer.

An embodiment of the present specification further provides a resource transfer verification apparatus, applied to a server and including:
a memory storing a program; and
a processor executing a program stored in the memory to perform operations including:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result including the verification information to the payer.

An embodiment of the present specification further provides a computer-readable storage medium, the computer-readable storage medium storing one or more program instructions that, when executed by an electronic device including a plurality of application programs, cause the electronic device to perform operations including:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result including the verification information to the payer.

An embodiment of the present specification further provides an electronic payment verification apparatus, applied to a payer and including:
a sending module configured to send a payment request to a server, the payment request being configured to request an electronic payment to a payee; and
a receiving module configured to receive a payment result that includes verification information and that is transmitted by the server, the verification information being determined by the server after completing the electronic payment from the payer to the payee according to the payment request, and the verification information being used for indicating that the electronic payment succeeds.

An embodiment of the present specification further provides a resource transfer verification apparatus, applied to a payer and including:
a memory storing a program; and
a processor executing a program stored in the memory to perform operations including:
   sending a payment request to a server, the payment request being configured to request an electronic payment to a payee; and
   receiving a payment result that includes verification information and that is transmitted by the server, the verification information being determined by the server after completing the electronic payment from the payer to the payee according to the payment request, and the verification information being used for indicating that the electronic payment succeeds.

An embodiment of the present specification further provides a computer-readable storage medium, the computer-readable storage medium storing one or more program instructions that, when executed by an electronic device including a plurality of application programs, cause the electronic device to perform operations including:
sending a payment request to a server, the payment request being configured to request an electronic payment to a payee; and
receiving a payment result that includes verification information and that is transmitted by the server, the verification information being determined by the server after completing an electronic payment from the payer to the payee according to the payment request, and the verification information being used for indicating that the electronic payment succeeds.

An embodiment of the present specification further provides an electronic payment verification apparatus, applied to a payee and including:
a setting module configured to set a personalized code; and
a sending module configured to send the personalized code to a server to enable the server to determine the personalized code as verification information after completing an electronic payment from a payer to the payee, the verification information being used for indicating that the electronic payment succeeds.

An embodiment of the present specification further provides a resource transfer verification apparatus, applied to a payee and including:
a memory storing a program; and
a processor executing a program stored in the memory to perform operations including:
   setting a personalized code; and
   sending the personalized code to a server to enable the server to determine the personalized code as verification information after completing an electronic payment from a payer to the payee, the verification information being used for indicating that the electronic payment succeeds.

An embodiment of the present specification further provides a computer-readable storage medium, the computer-readable storage medium storing one or more program instructions that, when executed by an electronic device including a plurality of application programs, cause the electronic device to perform operations including:
setting a personalized code; and
sending the personalized code to a server to enable the server to determine the personalized code as verification information after completing an electronic payment from a payer to the payee, the verification information being used for indicating that the electronic payment succeeds.

At least one of the foregoing technical solutions employed in the embodiments of the present specification can achieve the following beneficial effects.

The resource transfer request that is sent by a resource transferor and is used for requesting transfer of resources of the resource transferor to a resource transferee is received, verification information used for indicating that the transfer succeeds is further determined after resources of the resource transferor are transferred to the resource transferee according to the resource transfer request, and the resource transfer result including the verification information is transmitted to the resource transferor, so that the resource transferee may accurately determine, according to the verification information, whether the transfer is completed when the resource transferor shows the resource transferee the resource transfer result, thereby effectively avoiding omission of the resource transfer.

### BRIEF DESCRIPTION OF THE DRAWINGS

The accompanying drawings described herein are used for providing further understanding for the present specification and constitute a part of the present specification. Exemplary embodiments of the present specification and descriptions thereof are used for explaining the present specification and do not constitute an improper limitation to the present specification. In the figures:
FIG. 1 is a schematic flowchart of a resource transfer verification method according to an embodiment of the present specification;
FIG. 2 is a schematic diagram of a payment result according to an embodiment of the present specification;
FIG. 3 is a schematic diagram of a payment result including verification information according to an embodiment of the present specification;
FIG. 4 is a schematic diagram of a payment result including verification information according to an embodiment of the present specification;
FIG. 5 is a schematic flowchart of a resource transfer verification method according to an embodiment of the present specification;
FIG. 6 is a schematic flowchart of a resource transfer verification method according to an embodiment of the present specification;
FIG. 7 is a schematic flowchart of an electronic payment verification method according to an embodiment of the present specification;
FIG. 8 is a schematic flowchart of an electronic payment verification method according to an embodiment of the present specification;
FIG. 9 is a schematic flowchart of an electronic payment verification method according to an embodiment of the present specification;
FIG. 10 is a schematic flowchart of an electronic payment verification method according to an embodiment of the present specification;
FIG. 11 is a schematic structural diagram of an electronic device according to an embodiment of the present specification;
FIG. 12 is a schematic structural diagram of a resource transfer verification apparatus according to an embodiment of the present specification;
FIG. 13 is a schematic structural diagram of an electronic device according to an embodiment of the present specification;
FIG. 14 is a schematic structural diagram of a resource transfer verification apparatus according to an embodiment of the present specification;
FIG. 15 is a schematic structural diagram of an electronic device according to an embodiment of the present specification;
FIG. 16 is a schematic structural diagram of a resource transfer verification apparatus according to an embodiment of the present specification;
FIG. 17 is a schematic structural diagram of an electronic device according to an embodiment of the present specification;
FIG. 18 is a schematic structural diagram of an electronic payment verification apparatus according to an embodiment of the present specification;
FIG. 19 is a schematic structural diagram of an electronic device according to an embodiment of the present specification;
FIG. 20 is a schematic structural diagram of an electronic payment verification apparatus according to an embodiment of the present specification;
FIG. 21 is a schematic structural diagram of an electronic device according to an embodiment of the present specification; and
FIG. 22 is a schematic structural diagram of an electronic payment verification apparatus according to an embodiment of the present specification.

### DETAILED DESCRIPTION OF THE INVENTION

To make the objectives, technical solutions, and advantages of the present specification clearer, the following clearly and completely describes the technical solutions of the present specification with reference to specific embodiments of the present specification and the corresponding accompanying drawings. Apparently, the described embodiments are only some embodiments rather than all the embodiments of the present specification. All other embodiments obtained by a person of ordinary skill in the art based on the embodiments of the present specification without creative efforts shall fall within the protection scope of the present specification.

The technical solution provided by various embodiments of the present specification will be described in detail below with reference to the accompanying drawings.

### Embodiment 1

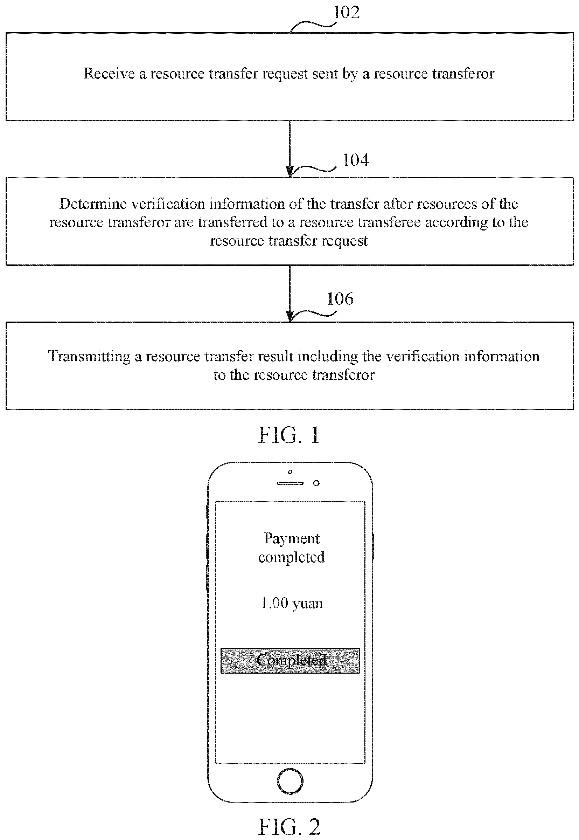

FIG. 1 is a schematic flowchart of a resource transfer verification method according to an embodiment of the present specification. The method is applied to a server and may be shown as follows.

Step 102: A resource transfer request sent by a resource transferor is received.

The resource transfer request is used for requesting transfer of resources of the resource transferor to a resource transferee.

When the resource transferor needs to perform resource transfer to the resource transferee, the resource transferor sends the resource transfer request to a server to request the server to transfer the resources of the resource transferor to the resource transferee.

Optionally, the resource transfer request sent by the resource transferor is sent by the resource transferor after scanning identification code information of the resource transferee.

Optionally, the identification code information includes one of the following: a barcode, a QR code, or an AR identification code.

In actual application, in order to quickly receive the resources transferred by the resource transferor, the resource transferee user may apply to the server for receiving the identification code information of the resources, so that the resource transferor can send, to the server through scanning the identification code information, the resource transfer request for requesting to transfer the resources of the resource transferor to the resource transferee.

For example, in an electronic payment scenario, the resource transferee is a payee, and the resource transferor is a payer. The payee sends an enabling request for enabling a receipt QR code to the server. After receiving the enabling request, the server determines the receipt QR code for the payee and returns the receipt QR code to the payee.

The payer sends a payment request (that is, a resource transfer request) for payment to the payee to the server through scanning the receipt QR code of the payee.

Step 104: After resources of the resource transferor are transferred to a resource transferee according to the resource transfer request, verification information of the transfer is determined.

The verification information is used for indicating that the transfer succeeds.

Step 106: A resource transfer result including the verification information is transmitted to the resource transferor.

After receiving the resource transfer request sent by the resource transferor, the server transfers the resources of the resource transferor to the resource transferee according to the resource transfer request, so that the transfer is completed, and the verification information for indicating that the transfer succeeds is further determined.

In actual application, upon completion of the resource transfer from the resource transferor to the resource transferee, the server sends a resource transfer-out result for prompting the success of the resource transfer to the resource transferor, and sends a resource transfer-in result for prompting the success of the resource transfer to the resource transferee.

The resource transferor determines the success of the resource transfer according to the resource transfer-out result, and the resource transferee determines the success of the resource transfer according to the resource transfer-in result.

However, when the resource transferee receives more resources within a preset time period, and has no time to check a resource transfer-in result corresponding to each transfer-in resource one by one. In this case, the resource transferor may show the resource transferee the resource transfer-out result to cause the resource transferee to determine, only through checking the resource transfer-out result shown by the resource transferor, whether the resources are transferred successfully without other operations, to improve efficiency of receiving the resources.

The foregoing electronic payment scenario is still used as an example. After the payment from the payer to the payee is completed, the payment result may be shown to the payee, so that the payee confirms that the payment is completed. FIG. 2 is a schematic diagram of a payment result according to an embodiment of the present specification.

In actual application, if the resource transferor does not transfer the resource to the resource transferee, but shows the resource transferee the resource transfer result page previously stored in a smart terminal device, the resource transferee cannot distinguish whether the resource transfer result is the resource transfer result page corresponding to the transfer, which may cause omission of the resource transfer.

The foregoing electronic payment scenario is still used as an example. The resource transferor is a consumer, and the resource transferee is a merchant. The consumer purchases a product from the merchant and pays the merchant through electronic payment. Before paying the merchant, the consumer shows the merchant the payment result for previously purchasing the same product. In this case, the merchant cannot distinguish whether the payment result is this payment, resulting in omission of payment.

In order to ensure that the resource transferee does not suffer a loss due to the omission of the resource transfer, upon completion of the transfer, the verification information for indicating that the transfer succeeds may be determined, and then the resource transfer result including the verification information is transmitted to the resource transferor, so that when the resource transferor shows the resource transferee the resource transfer result, the resource transferee may determine, through the verification information in the resource transfer result, that the resource transfer result is the resource transfer result corresponding to the transfer.

In the embodiment of the present specification, the verification information may be changed information, and the resource transfer result includes the verification information, so that the transfer is different from other resource transfers according to the resource transfer result.

Specifically, the method for determining the verification information of the transfer includes, but is not limited to, the following two methods.

### Method I:

determining a personalized code corresponding to a resource transferee, the personalized code being set by the resource transferee in advance; and
determining the personalized code as verification information.

The resource transferee sets the personalized code in advance and sends the set personalized code to a server for storage. The personalized code set by the resource transferee may be used to distinguish different resource transfer results.

The foregoing electronic payment scenario is still used as an example. The resource transferee is a payee, and the resource transferor is a payer. The payee sets a personalized code in advance, for example, sets a different code every day or a different code seven days a week to distinguish payment results corresponding to different days.

After the server completes the electronic payment from the payer to the payee, the server determines the personalized code corresponding to this payment according to an electronic payment date, determines the personalized code as verification information and adds the verification information to the payment result, and transmits the payment result including the verification information to the payer, so that after the payer completes the electronic payment and receives the payment result, when the payment result is shown to the payee, the payee may determine, according to the verification information in the payment result, whether the payment result is the payment result for this payment.

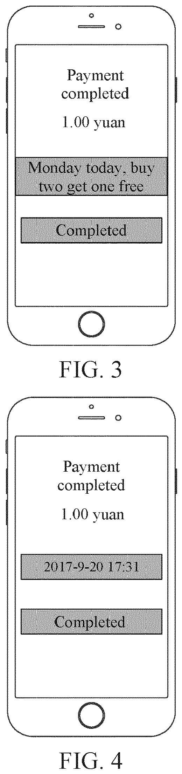

FIG. 3 is a schematic diagram of a payment result including verification information according to an embodiment of the present specification.

As shown in FIG. 3, "Monday today, buy two get one free" in the payment result is the personalized code set by the payee, which is different from the personalized code corresponding to other dates.

Through verification of the payment result shown in FIG. 3 and shown by the payer, the payee may determine, according to the personalized code included in the payment result, whether the payment result is this payment result.

If "Monday today, buy two get one free" is the personalized code corresponding to that day for this payment, it may be determined whether the payment result is this payment result.

If "Monday today, buy two get one free" is not the personalized code corresponding to that day for this payment, it may be determined that the payment result is not this payment result, and the payer may not complete the electronic payment.

The foregoing personalized code is applicable to different personalized codes corresponding to different dates to distinguish resource transfer results corresponding to different dates.

It should be noted that the resource transferee may set a different personalized code every day, or set a personalized code corresponding to each day within a preset date range once, which is not specifically limited herein.

### Method II:

determining time information when the transfer succeeds; and
determining the time information as verification information.

After the server completes the resource transfer from the resource transferor to the resource transferee, the time information when the transfer succeeds is determined. The time information includes: a date, hour, and minute, and the time information when the transfer succeeds corresponding to different resource transfers is different, and the time information when the transfer succeeds is determined as the verification information, the verification information being added to the resource transfer result, to distinguish different resource transfer results.

The foregoing electronic payment scenario is still used as an example. The resource transferee is a payee, and the resource transferor is a payer. Upon completion of the electronic payment from the payer to the payee, the server determines that the time information when the electronic payment succeeds is "2017-9-20 17:31", determines the time information as the verification information, adds the verification information to the payment result, and further transmits the payment result including the verification information to the payer.

FIG. 4 is a schematic diagram of a payment result including verification information according to an embodiment of the present specification.

A payer shows a payee the payment result shown in FIG. 4, so that the payee may determine, through verification of time information included in the payment result, whether the payment result is this payment result.

It should be noted that, in addition to a personalized code set by a resource transferee or time information when a resource transfer succeeds, the verification information may further be other information that may be used to distinguish resource transfer results corresponding to different resource transfers, which is not specifically limited herein.

A form of the personalized code may be text information or sound information, which is not specifically limited herein.

If the personalized code is sound information, a resource transferor plays the personalized sound code in the resource transfer result, so that the resource transferee can determine, according to the personalized sound code, whether the transfer is completed, that is, determine whether the resource transfer result is the result of the transfer.

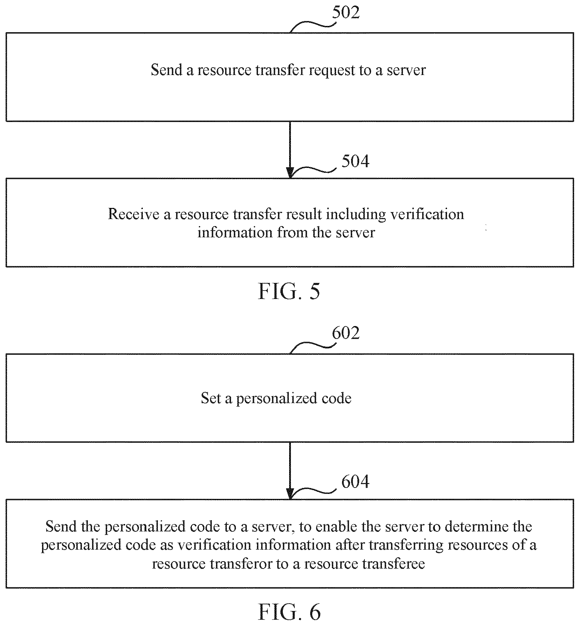

For the resource transferor, FIG. 5 is a schematic flowchart of a resource transfer verification method according to an embodiment of the present specification. The method may be described below.

Step 502: A resource transfer request is sent to a server.

The resource transfer request is used for requesting transfer of resources of a resource transferor to a resource transferee.

Optionally, the sending a resource transfer request to a server includes:
sending a resource transfer request to the server through scanning identification code information of the resource transferee.

Optionally, the identification code information includes one of the following: a barcode, a QR code, or an AR identification code.

The foregoing electronic payment scenario is still used as an example. The resource transferee is a payee, and the resource transferor is a payer. The payer sends a payment request (that is, a resource transfer request) for payment to the payee to the server through scanning a receipt QR code of the payee.

Step 504: A resource transfer result including the verification information from the server is received.

The verification information is determined after the server transfers resources of the resource transferor to resource transferee according to the resource transfer request, and the verification information is used for indicating that the transfer succeeds.

After the resource transfer is completed, the resource transferor receives the resource transfer result including the verification information from the server, where the verification information is determined by the server after the resource transfer is completed in order to ensure that the resource transferee will not suffer a loss due to omission of the resource transfer, and the verification information is used for indicating that the transfer succeeds.

The resource transferor may show the resource transferee the resource transfer result, so that the resource transferee determines, through the verification information in the resource transfer result, that the resource transfer result is the resource transfer result corresponding to the transfer.

For the resource transferee, FIG. 6 is a schematic flowchart of a resource transfer verification method according to an embodiment of the present specification. The method may be described below.

Step 602: A personalized code is set.

Optionally, the setting a personalized code includes:
setting the personalized code according to a preset time cycle.

The resource transferee sets the personalized code in advance and sends the set personalized code to a server for storage. The personalized code set by the resource transferee may be used to distinguish different resource transfer results. For example, different codes are set each day, or different codes are set seven days a week to distinguish resource transfer results corresponding to different days.

Step 604: The personalized code is sent to a server to enable the server to determine the personalized code as verification information after resources of a resource transferor are transferred to the resource transferee.

The verification information is used for indicating that the transfer succeeds.

The resource transferee sends the set personalized code to the server for storage, so that upon completion of the resource transfer to the resource transferee, the server determines that the personalized code corresponding to the transfer is the verification information, and then transmits the resource transfer result including the personalized code to the resource transferor, where the personalized code is used for indicating that the transfer succeeds.

The resource transferor may show the resource transferee the resource transfer result, so that the resource transferee determines, through the personalized code in the resource transfer result, that the resource transfer result is the resource transfer result corresponding to the transfer.

According to the technical solutions recorded in the embodiments of the present specification, the resource transfer request that is sent by the resource transferor and used for requesting transfer of resources of the resource transferor to the resource transferee is received, the verification information for indicating that the transfer succeeds is further determined after the resources of the resource transferor are transferred to the resource transferee according to the resource transfer request, and the resource transfer result including the verification information is transmitted to the resource transferor, so that the resource transferee may accurately determine, according to the verification information, whether the transfer is completed when the resource transferor shows the resource transferee the resource transfer result, thereby effectively avoiding the omission of resource transfer.

### Embodiment 2

Based on the foregoing embodiment 1, the inventive concept of the present specification is described in detail. In order to facilitate a better understanding of the technical features, means and effects of the present specification, the resource transfer verification method of the present specification is further described below, thereby forming still another embodiment of the present specification.

In Embodiment 2 of the present specification, a specific application scenario for resource transfer verification is electronic payment verification. A resource transferor during resource transfer is a payer, and a resource transferee is a payee.

The electronic payment verification process in Embodiment 2 of the present specification is similar to the resource transfer verification process described in Embodiment 1 above. For some other steps not described in Embodiment 2, reference may be made to the related description in Embodiment 1, and details are not described herein again.

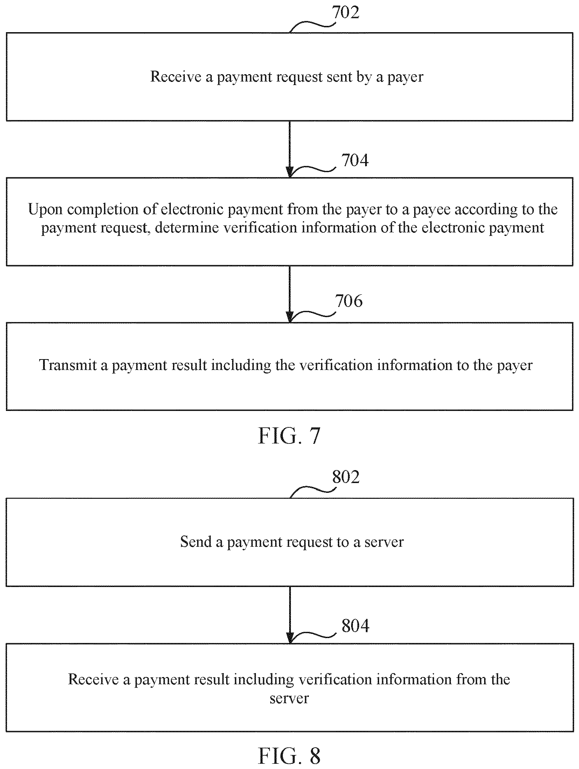

FIG. 7 is a schematic flowchart of an electronic payment verification method according to an embodiment of the present specification. The method is applied to a server and may be shown as follows.

Step 702: A payment request sent by a payer is received.

The payment request is configured to request an electronic payment to a payee.

Step 704: Verification information of the electronic payment is determined after electronic payment from the payer to the payee is completed according to the payment request.

The verification information is used for indicating that the electronic payment succeeds.

Step 706: A payment result including the verification information is transmitted to the payer.

Optionally, the determining verification information of the electronic payment includes:
determining a personalized code corresponding to the payee, the personalized code being set by the payee in advance; and
determining the personalized code as verification information.

Optionally, the determining verification information of the electronic payment includes:
determining time information when the electronic payment succeeds; and
determining time information as verification information.

Optionally, a payment request sent by the payer is sent by the payer through scanning identification code information of the payee.

Optionally, the identification code information includes one of the following: a barcode, a QR code, or an AR identification code.

For the payer, FIG. 8 is a schematic flowchart of an electronic payment verification method according to an embodiment of the present specification. The method may be shown as follows.

Step 802: A payment request is sent to a server.

The payment request is configured to request an electronic payment to a payee.

Step 804: A payment result including verification information from the server is received.

The verification information is determined after the server completes electronic payment from the payer to the payee according to the payment request, and the verification information is used for indicating that the electronic payment succeeds.

Optionally, the sending a payment request to a server includes:
sending the payment request to the server through scanning identification code information of the payee.

Optionally, the identification code information includes one of the following: a barcode, a QR code, or an AR identification code.

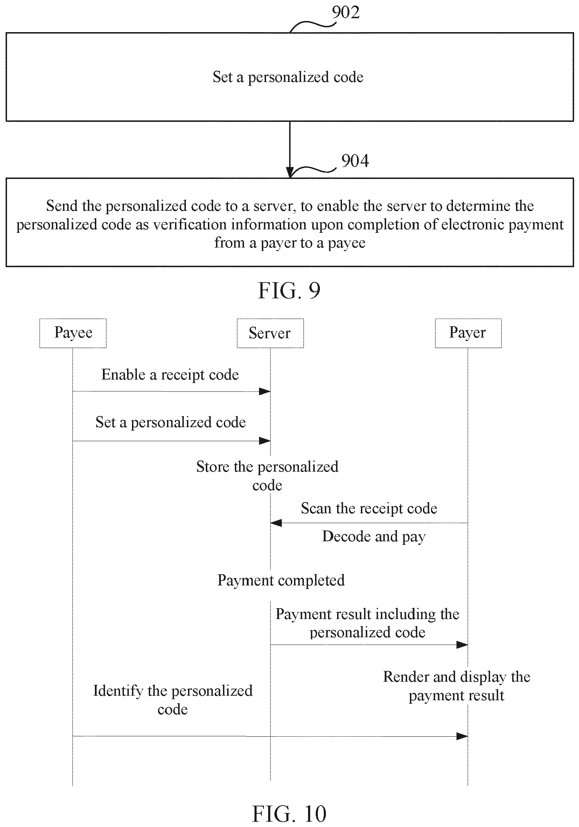

For the payee, FIG. 9 is a schematic flowchart of an electronic payment verification method according to an embodiment of the present specification. The method may be shown as follows.

Step 902: A personalized code is set.

Step 904: The personalized code is sent to a server to enable the server to determine the personalized code as verification information after completing an electronic payment from a payer to a payee.

The verification information is used for indicating that the electronic payment succeeds.

Optionally, the setting a personalized code includes:
setting the personalized code according to a preset time cycle.

FIG. 10 is a schematic flowchart of an electronic payment verification method according to an embodiment of the present specification. The method may be shown as follows.

Step 11: A payee determines a receipt code through sending an enabling request of the receipt code to a server.

The receipt code includes one of the following: a barcode, a QR code, or an AR identification code.

Step 12: The payee sets a personalized code and sends the personalized code to the server.

The payee may set different personalized codes every day.

Step 13: The server receives the personalized code sent by the payee.

Step 14: The payer sends a payment request to the server through scanning the receipt code of the payee and decoding the receipt code.

Step 15: The server completes electronic payment from the payer to the payee according to the payment request.

Step 16: After determining that the electronic payment is completed, the server determines a personalized code preset by a receipt end corresponding to the electronic payment.

Step 17: The server sends a payment result including the personalized code to the payer.

Step 18: The payer renders and shows the received payment result.

Step 19: The payee confirms whether the electronic payment is completed through identifying the personalized code in the payment result shown by the payer.

According to the technical solutions recorded in the embodiments of the present specification, the payment request that is sent by the payer and that is configured to request to perform electronic payment to the payee is received, the verification information for indicating that the electronic payment succeeds is further determined after the electronic payment from the payer to the payee is completed according to the payment request, and the payment result including the verification information is transmitted to the payer, so that the payee can accurately determine, according to the verification information, whether this payment is completed when the payer shows the payee the payment result, thereby effectively avoiding omission of receipts.

### Embodiment 3

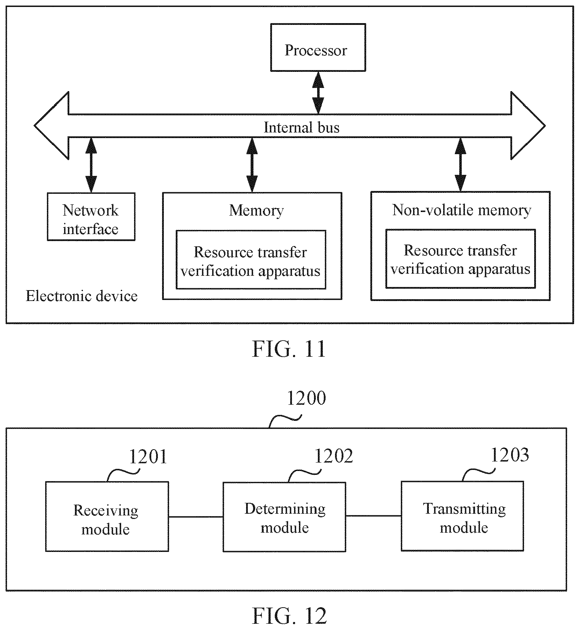

FIG. 11 is a schematic structural diagram of an electronic device according to an embodiment of the present specification. As shown in FIG. 11, at the hardware level, the electronic device includes a processor, and optionally, includes an internal bus, a network interface, and a memory. The memory may include a memory, for example, a random access memory (RAM), or may further include a non-volatile memory, for example, at least one magnetic disk memory. Certainly, the electronic device may further include hardware required for other services.

The processor, the network interface, and the memory may be connected to each other through the internal bus. The internal bus may be an industry standard architecture (ISA) bus, a peripheral component interconnect (PCI) bus, or an extended industry standard architecture (EISA) bus. The bus may be classified into an address bus, a data bus, a control bus, and the like. For ease of illustration, in FIG. 11, the bus is represented by using only one double-sided arrow. This, however, does not indicate that there is only one bus or only one type of bus.

The memory is configured to store a program. Specifically, the program may include program code, where the program code includes a computer operation instruction. The memory may include an internal memory and a non-volatile memory, and provide instructions and data to the processor.

The processor reads a corresponding computer program from the non-volatile memory into the memory and then executes the computer program, to form a resource transfer verification apparatus at the logic level. The processor executes the program stored in the memory and is specifically configured to perform the following operations:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result including the verification information to the resource transferor.

The method described above as performed in Embodiment 1 of the present specification may be applied to a processor, or may be implemented by a processor. The processor may be an integrated circuit chip and has a signal processing capability. In an implementation process, steps of the foregoing method may be implemented by using a hardware integrated logic circuit in the processor or instructions in a form of software. The processor may be a general processor, including a central processing unit (CPU), a network processor (NP), and the like; or may further be a digital signal processor (DSP), an application-specific integrated circuit (ASIC), a field programmable gate array (FPGA), or another programmable logical device, discrete gate or transistor logical device, or discrete hardware component. It may implement or perform the methods, the steps, and logical block diagrams that are disclosed in the embodiments of the present specification. The general-purpose processor may be a microprocessor, or the processor may be any conventional processor or the like. Steps of the methods disclosed with reference to the embodiments of the present specification may be directly performed and completed by using a hardware decoding processor, or may be performed and completed by using a combination of hardware and a software module in the decoding processor. The software module may be located in a mature storage medium in the art, such as a RAM, a flash memory, a ROM, a programmable ROM, an electrically erasable programmable memory, or a register. The storage medium is located in the memory, and the processor reads information in the memory and completes the steps in the foregoing methods in combination with hardware of the processor.

The electronic device may also perform the method performed in FIG. 1 and implement the functions of the foregoing Embodiment 1, which is not described in this embodiment of the present specification again.

An embodiment of the present specification further provides a computer readable storage medium. The computer readable storage medium stores one or more program instructions, the one or more program instructions include an instruction, and when the instruction is executed by an electronic device including a plurality of applications, the electronic device is enabled to perform the resource transfer verification method in the embodiment shown in FIG. 1 and is specifically configured to perform the following steps:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result including the verification information to the resource transferor.

FIG. 12 is a schematic structural diagram of a resource transfer verification apparatus according to an embodiment of the present specification. The apparatus 1200 is applied to a server and includes: a receiving module 1201, a determining module 1202, and a transmitting module 1203, where:
the receiving module 1201 receives a resource transfer request sent by a resource transferor, the resource transfer request being used for requesting transfer of resources of the resource transferor to a resource transferee;
the determining module 1202 determines verification information of the transfer after the resources of the resource transferor are transferred to the resource transferee according to the resource transfer request, the verification information being used for indicating that the transfer succeeds; and
the transmitting module 1203 transmits a resource transfer result including the verification information to the resource transferor.

Optionally, the determining module 1202 determines verification information of the transfer by:
determining a personalized code corresponding to the resource transferee, the personalized code being preset by the resource transferee; and
determining the personalized code as the verification information.

Optionally, the determining module 1202 determines verification information of the transfer by:
determining time information when the transfer succeeds; and
determining the time information as the verification information.

Optionally, the resource transfer request sent by the resource transferor is sent by the resource transferor after scanning identification code information of the resource transferee.

Optionally, the identification code information includes one of the following: a barcode, a QR code, or an AR identification code.

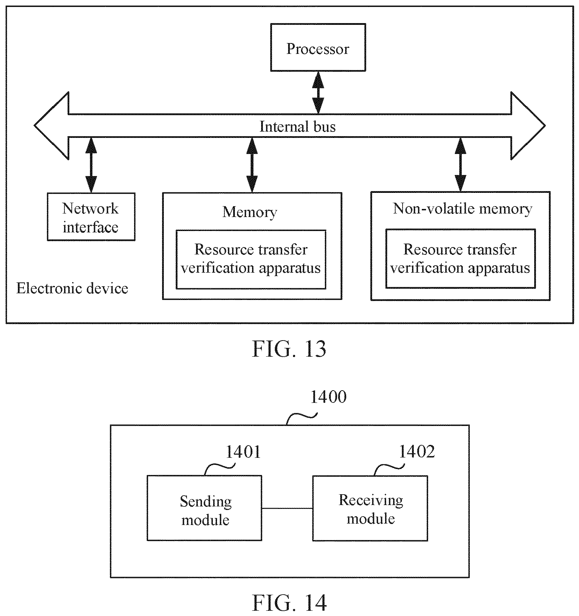

FIG. 13 is a schematic structural diagram of an electronic device according to an embodiment of the present specification. As shown in FIG. 13, at the hardware level, the electronic device includes a processor, and optionally, includes an internal bus, a network interface, and a memory. The memory may include a memory, for example, a random access memory (RAM), or may further include a non-volatile memory, for example, at least one magnetic disk memory. Certainly, the electronic device may further include hardware required for other services.

The processor, the network interface, and the memory may be connected to each other through the internal bus. The internal bus may be an industry standard architecture (ISA) bus, a peripheral component interconnect (PCI) bus, or an extended industry standard architecture (EISA) bus. The bus may be classified into an address bus, a data bus, a control bus, and the like. For ease of illustration, in FIG. 13, the bus is represented by using only one double-sided arrow. This, however, does not indicate that there is only one bus or only one type of bus.

The memory is configured to store a program. Specifically, the program may include program code, where the program code includes a computer operation instruction. The memory may include an internal memory and a non-volatile memory, and provide instructions and data to the processor.

The processor reads a corresponding computer program from the non-volatile memory into the memory and then executes the computer program, to form a resource transfer verification apparatus at the logic level. The processor executes the program stored in the memory and is specifically configured to perform the following operations:
sending a resource transfer request to a server, the resource transfer request being used for requesting transfer of resources of the resource transferor to a resource transferee; and
receiving a resource transfer result that includes verification information and that is transmitted by the server, the verification information being determined by the server after the resources of the resource transferor are transferred to the resource transferee according to the resource transfer request, and the verification information being used for indicating that the transfer succeeds.

The method described above as performed in Embodiment 1 of the present specification may be applied to a processor, or may be implemented by a processor. The processor may be an integrated circuit chip and has a signal processing capability. In an implementation process, steps of the foregoing method may be implemented by using a hardware integrated logic circuit in the processor or instructions in a form of software. The processor may be a general processor, including a central processing unit (CPU), a network processor (NP), and the like; or may further be a digital signal processor (DSP), an application-specific integrated circuit (ASIC), a field programmable gate array (FPGA), or another programmable logical device, discrete gate or transistor logical device, or discrete hardware component. It may implement or perform the methods, the steps, and logical block diagrams that are disclosed in the embodiments of the present specification. The general-purpose processor may be a microprocessor, or the processor may be any conventional processor or the like. Steps of the methods disclosed with reference to the embodiments of the present specification may be directly performed and completed by using a hardware decoding processor, or may be performed and completed by using a combination of hardware and a software module in the decoding processor. The software module may be located in a mature storage medium in the art, such as a RAM, a flash memory, a ROM, a programmable ROM, an electrically erasable programmable memory, or a register. The storage medium is located in the memory, and the processor reads information in the memory and completes the steps in the foregoing methods in combination with hardware of the processor.

The electronic device may also perform the method performed in FIG. 5 and implement the functions of the foregoing Embodiment 1, which is not described in this embodiment of the present specification again.

An embodiment of the present specification further provides a computer readable storage medium. The computer readable storage medium stores one or more program instructions, the one or more program instructions include an instruction, and when the instruction is executed by an electronic device including a plurality of applications, the electronic device is enabled to perform the resource transfer verification method in the embodiment shown in FIG. 5 and is specifically configured to perform the following steps:
sending a resource transfer request to a server, the resource transfer request being used for requesting transfer of resources of the resource transferor to a resource transferee; and
receiving a resource transfer result that includes verification information and that is transmitted by the server, the verification information being determined by the server after the resources of the resource transferor are transferred to the resource transferee according to the resource transfer request, and the verification information being used for indicating that the transfer succeeds.

FIG. 14 is a schematic structural diagram of a resource transfer verification apparatus according to an embodiment of the present specification. The apparatus 1400 is applied to a resource transferor and includes: a sending module 1401 and a receiving module 1402, where
the sending module 1401 sends a resource transfer request to a server, the resource transfer request being used for requesting transfer of resources of the resource transferor to a resource transferee; and
the receiving module 1402 receives a resource transfer result that includes verification information and that is transmitted by the server, the verification information being determined by the server after the resources of the resource transferor are transferred to the resource transferee according to the resource transfer request, and the verification information being used for indicating that the transfer succeeds.

Optionally, the sending module 1401 sends a resource transfer request to a server by:
sending the resource transfer request to the server through scanning identification code information of the resource transferee.

Optionally, the identification code information includes one of the following: a barcode, a QR code, or an AR identification code.

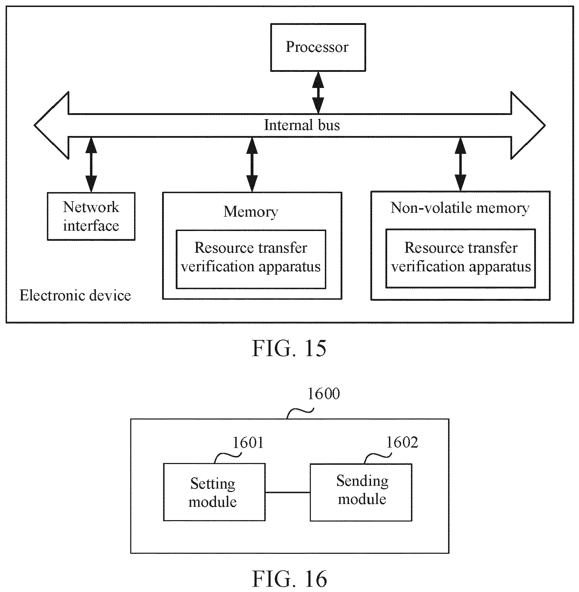

FIG. 15 is a schematic structural diagram of an electronic device according to an embodiment of the present specification. As shown in FIG. 15, at the hardware level, the electronic device includes a processor, and optionally, includes an internal bus, a network interface, and a memory. The memory may include a memory, for example, a random access memory (RAM), or may further include a non-volatile memory, for example, at least one magnetic disk memory. Certainly, the electronic device may further include hardware required for other services.

The processor, the network interface, and the memory may be connected to each other through the internal bus. The internal bus may be an industry standard architecture (ISA) bus, a peripheral component interconnect (PCI) bus, or an extended industry standard architecture (EISA) bus. The bus may be classified into an address bus, a data bus, a control bus, and the like. For ease of illustration, in FIG. 15, the bus is represented by using only one double-sided arrow. This, however, does not indicate that there is only one bus or only one type of bus.

The memory is configured to store a program. Specifically, the program may include program code, where the program code includes a computer operation instruction. The memory may include an internal memory and a non-volatile memory, and provide instructions and data to the processor.

The processor reads a corresponding computer program from the non-volatile memory into the memory and then executes the computer program, to form a resource transfer verification apparatus at the logic level. The processor executes the program stored in the memory and is specifically configured to perform the following operations:
setting a personalized code; and
sending the personalized code to a server to enable the server to determine the personalized code as verification information after resources of a resource transferor are transferred to the resource transferee, the verification information being used for indicating that the transfer succeeds.

The method described above as performed in Embodiment 1 of the present specification may be applied to a processor, or may be implemented by a processor. The processor may be an integrated circuit chip and has a signal processing capability. In an implementation process, steps of the foregoing method may be implemented by using a hardware integrated logic circuit in the processor or instructions in a form of software. The processor may be a general processor, including a central processing unit (CPU), a network processor (NP), and the like; or may further be a digital signal processor (DSP), an application-specific integrated circuit (ASIC), a field programmable gate array (FPGA), or another programmable logical device, discrete gate or transistor logical device, or discrete hardware component. It may implement or perform the methods, the steps, and logical block diagrams that are disclosed in the embodiments of the present specification. The general-purpose processor may be a microprocessor, or the processor may be any conventional processor or the like. Steps of the methods disclosed with reference to the embodiments of the present specification may be directly performed and completed by using a hardware decoding processor, or may be performed and completed by using a combination of hardware and a software module in the decoding processor. The software module may be located in a mature storage medium in the art, such as a RAM, a flash memory, a ROM, a programmable ROM, an electrically erasable programmable memory, or a register. The storage medium is located in the memory, and the processor reads information in the memory and completes the steps in the foregoing methods in combination with hardware of the processor.

The electronic device may also perform the method performed in FIG. 6 and implement the functions of the foregoing Embodiment 1, which is not described in this embodiment of the present specification again.

An embodiment of the present specification further provides a computer readable storage medium. The computer readable storage medium stores one or more program instructions, the one or more program instructions include an instruction, and when the instruction is executed by an electronic device including a plurality of applications, the electronic device is enabled to perform the resource transfer verification method in the embodiment shown in FIG. 6 and is specifically configured to perform the following steps:
setting a personalized code; and
sending the personalized code to a server to enable the server to determine the personalized code as verification information after resources of a resource transferor are transferred to the resource transferee, the verification information being used for indicating that the transfer succeeds.

FIG. 16 is a schematic structural diagram of a resource transfer verification apparatus according to an embodiment of the present specification. The apparatus 1600 is applied to a resource transferee and includes: a setting module 1601 and a sending module 1602, where
the setting module 1601 sets a personalized code; and
the sending module 1602 sends the personalized code to a server to enable the server to determine the personalized code as verification information after resources of a resource transferor are transferred to the resource transferee, the verification information being used for indicating that the transfer succeeds.

Optionally, the setting module 1601 sets a personalized code by:
setting the personalized code according to a preset time cycle.

### Embodiment 4

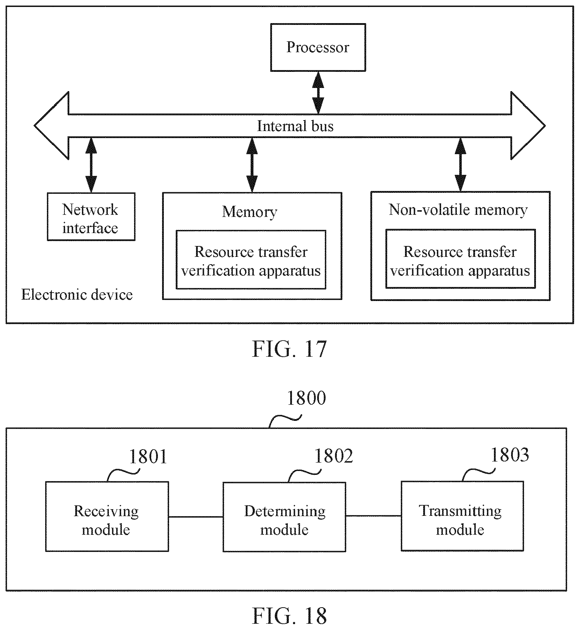

FIG. 17 is a schematic structural diagram of an electronic device according to an embodiment of the present specification. As shown in FIG. 17, at the hardware level, the electronic device includes a processor, and optionally, includes an internal bus, a network interface, and a memory. The memory may include a memory, for example, a random access memory (RAM), or may further include a non-volatile memory, for example, at least one magnetic disk memory. Certainly, the electronic device may further include hardware required for other services.

The processor, the network interface, and the memory may be connected to each other through the internal bus. The internal bus may be an industry standard architecture (ISA) bus, a peripheral component interconnect (PCI) bus, or an extended industry standard architecture (EISA) bus. The bus may be classified into an address bus, a data bus, a control bus, and the like. For ease of illustration, in FIG. 17, the bus is represented by using only one double-sided arrow. This, however, does not indicate that there is only one bus or only one type of bus.

The memory is configured to store a program. Specifically, the program may include program code, where the program code includes a computer operation instruction. The memory may include an internal memory and a non-volatile memory, and provide instructions and data to the processor.

The processor reads a corresponding computer program from the non-volatile memory into the memory and then executes the computer program, to form an electronic payment verification apparatus at the logic level. The processor executes the program stored in the memory and is specifically configured to perform the following operations:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result comprising the verification information to the payer.

The method described above as performed in Embodiment 2 of the present specification may be applied to a processor, or may be implemented by a processor. The processor may be an integrated circuit chip and has a signal processing capability. In an implementation process, steps of the foregoing method may be implemented by using a hardware integrated logic circuit in the processor or instructions in a form of software. The processor may be a general processor, including a central processing unit (CPU), a network processor (NP), and the like; or may further be a digital signal processor (DSP), an application-specific integrated circuit (ASIC), a field programmable gate array (FPGA), or another programmable logical device, discrete gate or transistor logical device, or discrete hardware component. It may implement or perform the methods, the steps, and logical block diagrams that are disclosed in the embodiments of the present specification. The general-purpose processor may be a microprocessor, or the processor may be any conventional processor or the like. Steps of the methods disclosed with reference to the embodiments of the present specification may be directly performed and completed by using a hardware decoding processor, or may be performed and completed by using a combination of hardware and a software module in the decoding processor. The software module may be located in a mature storage medium in the art, such as a RAM, a flash memory, a ROM, a programmable ROM, an electrically erasable programmable memory, or a register. The storage medium is located in the memory, and the processor reads information in the memory and completes the steps in the foregoing methods in combination with hardware of the processor.

The electronic device may also perform the method performed in FIG. 7 and/or FIG. 10 and implement the functions of the foregoing Embodiment 2, which is not described in this embodiment of the present specification again.

An embodiment of the present specification further provides a computer readable storage medium. The computer readable storage medium stores one or more program instructions, the one or more program instructions include an instruction, and when the instruction is executed by an electronic device including a plurality of applications, the electronic device is enabled to perform the resource transfer verification method in the embodiment shown in FIG. 7 and/or FIG. 10 and is specifically configured to perform the following steps:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result comprising the verification information to the payer.

FIG. 18 is a schematic structural diagram of an electronic payment verification apparatus according to an embodiment of the present specification. The apparatus 1800 is applied to a server and includes: a receiving module 1801, a determining module 1802, and a transmitting module 1803, where:
the receiving module 1801 receives a payment request sent by a payer, the payment request being configured to request an electronic payment to a payee;
the determining module 1802 determines verification information of the electronic payment after completing the electronic payment from the payer to the payee according to the payment request, the verification information being used for indicating that the electronic payment succeeds; and
the transmitting module 1803 transmits a payment result comprising the verification information to the payer.

Optionally, the determining module 1802 determines verification information of the electronic payment by:
determining a personalized code corresponding to the payee, the personalized code being preset by the payee; and
determining the personalized code as the verification information.

Optionally, the determining module 1802 determines verification information of the electronic payment by:
determining time information when the electronic payment succeeds; and
determining the time information as the verification information.

Optionally, the payment request sent by the payer is sent by the payer after scanning identification code information of the payee.

Optionally, the identification code information includes one of the following: a barcode, a QR code, or an AR identification code.

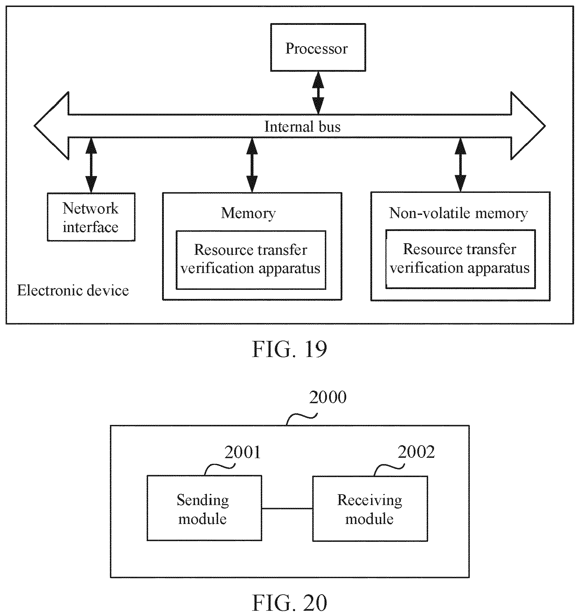

FIG. 19 is a schematic structural diagram of an electronic device according to an embodiment of the present specification. As shown in FIG. 19, at the hardware level, the electronic device includes a processor, and optionally, includes an internal bus, a network interface, and a memory. The memory may include a memory, for example, a random access memory (RAM), or may further include a non-volatile memory, for example, at least one magnetic disk memory. Certainly, the electronic device may further include hardware required for other services.

The processor, the network interface, and the memory may be connected to each other through the internal bus. The internal bus may be an industry standard architecture (ISA) bus, a peripheral component interconnect (PCI) bus, or an extended industry standard architecture (EISA) bus. The bus may be classified into an address bus, a data bus, a control bus, and the like. For ease of illustration, in FIG. 19, the bus is represented by using only one double-sided arrow. This, however, does not indicate that there is only one bus or only one type of bus.

The memory is configured to store a program. Specifically, the program may include program code, where the program code includes a computer operation instruction. The memory may include an internal memory and a non-volatile memory, and provide instructions and data to the processor.

The processor reads a corresponding computer program from the non-volatile memory into the memory and then executes the computer program, to form an electronic payment verification apparatus at the logic level. The processor executes the program stored in the memory and is specifically configured to perform the following operations:
sending a payment request to a server, the payment request being configured to request an electronic payment to a payee; and
receiving a payment result that includes verification information and that is transmitted by the server, the verification information being determined by the server after completing the electronic payment from the payer to the payee according to the payment request, and the verification information being used for indicating that the electronic payment succeeds.

The method described above as performed in Embodiment 2 of the present specification may be applied to a processor, or may be implemented by a processor. The processor may be an integrated circuit chip and has a signal processing capability. In an implementation process, steps of the foregoing method may be implemented by using a hardware integrated logic circuit in the processor or instructions in a form of software. The processor may be a general processor, including a central processing unit (CPU), a network processor (NP), and the like; or may further be a digital signal processor (DSP), an application-specific integrated circuit (ASIC), a field programmable gate array (FPGA), or another programmable logical device, discrete gate or transistor logical device, or discrete hardware component. It may implement or perform the methods, the steps, and logical block diagrams that are disclosed in the embodiments of the present specification. The general-purpose processor may be a microprocessor, or the processor may be any conventional processor or the like. Steps of the methods disclosed with reference to the embodiments of the present specification may be directly performed and completed by using a hardware decoding processor, or may be performed and completed by using a combination of hardware and a software module in the decoding processor. The software module may be located in a mature storage medium in the art, such as a RAM, a flash memory, a ROM, a programmable ROM, an electrically erasable programmable memory, or a register. The storage medium is located in the memory, and the processor reads information in the memory and completes the steps in the foregoing methods in combination with hardware of the processor.

The electronic device may also perform the method performed in FIG. 8 and/or FIG. 10 and implement the functions of the foregoing Embodiment 2, which is not described in this embodiment of the present specification again.

An embodiment of the present specification further provides a computer readable storage medium. The computer readable storage medium stores one or more program instructions, the one or more program instructions include an instruction, and when the instruction is executed by an electronic device including a plurality of applications, the electronic device is enabled to perform the resource transfer verification method in the embodiment shown in FIG. 8 and/or FIG. 10 and is specifically configured to perform the following steps:
sending a payment request to a server, the payment request being configured to request an electronic payment to a payee; and
receiving a payment result that includes verification information and that is transmitted by the server, the verification information being determined by the server after completing the electronic payment from the payer to the payee according to the payment request, and the verification information being used for indicating that the electronic payment succeeds.

FIG. 20 is a schematic structural diagram of an electronic payment verification apparatus according to an embodiment of the present specification.

An apparatus 2000 is applied to a payee and includes: a sending module 2001 and a receiving module 2002, where
the sending module 2001 sends a payment request to a server, the payment request being configured to request an electronic payment to a payee; and
the receiving module 2002 receives a payment result that includes verification information and that is transmitted by the server, the verification information being determined by the server after completing the electronic payment from the payer to the payee according to the payment request, and the verification information being used for indicating that the electronic payment succeeds.

Optionally, the sending module 2001 sends a payment request to a server by:
sending the payment request to the server through scanning identification code information of the payee.

Optionally, the identification code information includes one of the following: a barcode, a QR code, or an AR identification code.

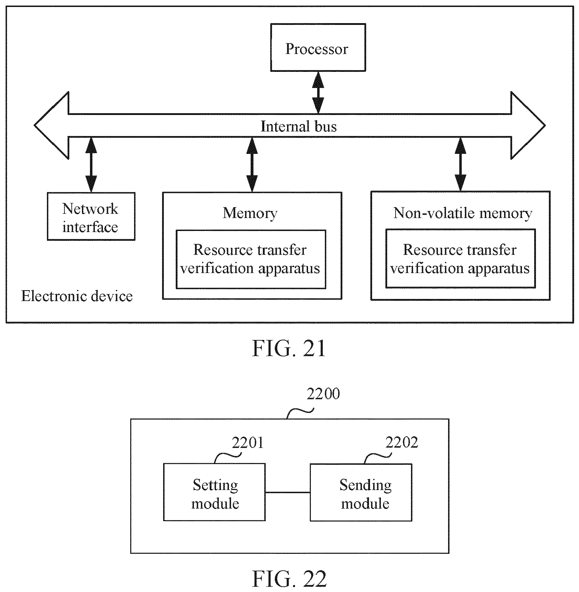

FIG. 21 is a schematic structural diagram of an electronic device according to an embodiment of the present specification. As shown in FIG. 21, at the hardware level, the electronic device includes a processor, and optionally, includes an internal bus, a network interface, and a memory. The memory may include a memory, for example, a random access memory (RAM), or may further include a non-volatile memory, for example, at least one magnetic disk memory. Certainly, the electronic device may further include hardware required for other services.

The processor, the network interface, and the memory may be connected to each other through the internal bus. The internal bus may be an industry standard architecture (ISA) bus, a peripheral component interconnect (PCI) bus, or an extended industry standard architecture (EISA) bus. The bus may be classified into an address bus, a data bus, a control bus, and the like. For ease of illustration, in FIG. 21, the bus is represented by using only one double-sided arrow. This, however, does not indicate that there is only one bus or only one type of bus.

The memory is configured to store a program. Specifically, the program may include program code, where the program code includes a computer operation instruction. The memory may include an internal memory and a non-volatile memory, and provide instructions and data to the processor.

The processor reads a corresponding computer program from the non-volatile memory into the memory and then executes the computer program, to form an electronic payment verification apparatus at the logic level. The processor executes the program stored in the memory and is specifically configured to perform the following operations:
setting a personalized code; and
sending the personalized code to a server to enable the server to determine the personalized code as verification information after completing an electronic payment from a payer to the payee, the verification information being used for indicating that the electronic payment succeeds.

The method described above as performed in Embodiment 2 of the present specification may be applied to a processor, or may be implemented by a processor. The processor may be an integrated circuit chip and has a signal processing capability. In an implementation process, steps of the foregoing method may be implemented by using a hardware integrated logic circuit in the processor or instructions in a form of software. The processor may be a general processor, including a central processing unit (CPU), a network processor (NP), and the like; or may further be a digital signal processor (DSP), an application-specific integrated circuit (ASIC), a field programmable gate array (FPGA), or another programmable logical device, discrete gate or transistor logical device, or discrete hardware component. It may implement or perform the methods, the steps, and logical block diagrams that are disclosed in the embodiments of the present specification. The general-purpose processor may be a microprocessor, or the processor may be any conventional processor or the like. Steps of the methods disclosed with reference to the embodiments of the present specification may be directly performed and completed by using a hardware decoding processor, or may be performed and completed by using a combination of hardware and a software module in the decoding processor. The software module may be located in a mature storage medium in the art, such as a RAM, a flash memory, a ROM, a programmable ROM, an electrically erasable programmable memory, or a register. The storage medium is located in the memory, and the processor reads information in the memory and completes the steps in the foregoing methods in combination with hardware of the processor.

The electronic device may also perform the method performed in FIG. 9 and/or FIG. 10 and implement the functions of the foregoing Embodiment 2, which is not described in this embodiment of the present specification again.

An embodiment of the present specification further provides a computer readable storage medium. The computer readable storage medium stores one or more program instructions, the one or more program instructions include an instruction, and when the instruction is executed by an electronic device including a plurality of applications, the electronic device is enabled to perform the resource transfer verification method in the embodiment shown in FIG. 9 and/or FIG. 10 and is specifically configured to perform the following steps:
setting a personalized code; and
sending the personalized code to a server to enable the server to determine the personalized code as verification information after completing an electronic payment from a payer to the payee, the verification information being used for indicating that the electronic payment succeeds.

FIG. 22 is a schematic structural diagram of an electronic payment verification apparatus according to an embodiment of the present specification. The apparatus 2200 is applied to a payee and includes: a setting module 2201 and a sending module 2202, where
the setting module 2201 sets a personalized code; and
the sending module 2202 sends the personalized code to a server to enable the server to determine the personalized code as verification information after completing an electronic payment from a payer to the payee, the verification information being used for indicating that the electronic payment succeeds.

Optionally, the setting module 2201 sets a personalized code by:
setting the personalized code according to a preset time cycle.

In the 1990s, improvements of a technology can be clearly distinguished between hardware improvements (for example, improvements to a circuit structure such as a diode, a transistor, a switch, etc.) and software improvements (improvements to a method procedure). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) such as a field programmable gate array (FPGA) is a type of integrated circuit whose logic function is determined by a user by programming the device. The designers perform voluntary programming to "integrate" a digital system into a single PLD without requiring a chip manufacturer to design and prepare a dedicated integrated circuit chip. Moreover, nowadays, instead of manually making integrated circuit chips, this programming is mostly implemented by using "logic compiler" software, which is similar to the software compiler used in program development and writing. The original code is written in a specific programming language before compiling, and this language is referred to as a hardware description language (HDL). There are various kinds of HDLs, for example, advanced Boolean expression language (ABEL), altera hardware description language (AHDL), Confluence, Cornell university programming language (CUPL), HDCal, Java hardware description language (JHDL), Lava, Lola, MyHDL, PALASM, Ruby hardware description language (RHDL), and the like. Currently, the most commonly used HDLs are very-high-speed integrated circuit hardware description language (VHDL) and Verilog. A person skilled in the art should also understand that as long as a method procedure is logically programmed and then programmed to an integrated circuit by using the foregoing hardware description languages, a hardware circuit that implements the logical method procedure can be easily obtained.

The controller can be implemented in any suitable manner, for example, the controller can take the form of, for example, a microprocessor or processor and a computer-readable medium storing computer-readable program code (for example, software or firmware) executable by the processor, a logic gate, a switch, an application-specific integrated circuit (ASIC), a programmable logic controller and an embedded microcontroller. Examples of the controller include, but are not limited to, the following microcontrollers: ARC 625D, Atmel AT91SAM, Microchip PIC18F26K20 and Silicone Labs C8051F320. The memory controller can also be implemented as part of the memory control logic. A person skilled in the art will also appreciate that, in addition to implementing the controller in the form of pure computer-readable program code, it is also possible to implement the controller in the form of a logic gate, switch, application-specific integrated circuit, programmable logic controller, and embedded microcontroller and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments can be specifically implemented by a computer chip or an entity or implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, when the apparatus is described, the apparatus is divided into units according to functions, which are separately described. Certainly, in implementation of the present specification, the function of the units may be implemented in a same piece of or multiple pieces of software and/or hardware.

A person skilled in the art should understand that the embodiments of the present specification may be provided as a method, a system, or a computer program product. Therefore, the present specification may use a form of hardware only embodiments, software only embodiments, or embodiments with a combination of software and hardware. Moreover, the present specification may use a form of a computer program product that is implemented on one or more computer-usable storage media (including but not limited to a disk memory, a CD-ROM, an optical memory, and the like) that include computer-usable program code.

The present specification is described with reference to the flowchart and/or block diagram of the method, device (system), and computer program product of the embodiments of the present specification. It should be understood that computer program instructions can implement each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by the general-purpose computer or the processor of another programmable data processing device.

These computer program instructions may also be stored in a computer readable memory that can guide a computer or another programmable data processing device to work in a specific manner, so that the instructions stored in the computer readable memory generate a product including an instruction apparatus, where the instruction apparatus implements functions specified in one or more procedures in the flowcharts and/or one or more blocks in the block diagrams.

These computer program instructions may also be loaded into a computer or another programmable data processing device, so that a series of operation steps are performed on the computer or another programmable data processing device to generate processing implemented by a computer, and instructions executed on the computer or another programmable data processing device provide steps for implementing functions specified in one or more procedures in the flowcharts and/or one or more blocks in the block diagrams.

In a typical configuration, the computer device includes one or more processors (CPUs), an input/output interface, a network interface, and a memory.

The memory may include a form such as a persistent memory, a random-access memory (RAM) and/or a non-volatile memory of computer readable media, for example, a read-only memory (ROM) or a flash memory (RAM).The memory is an example of the computer readable medium.

The computer readable medium includes a persistent medium and a non-persistent medium, a removable medium and a non-removable medium, which may implement storage of information by using any method or technology. The information may be a computer readable instruction, a data structure, a module of a program or other data. Examples of computer storage media include but are not limited to a phase change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette magnetic tape, tape and disk storage or other magnetic storage device or any other non-transmission media that may be configured to store information that a computing device can access. Based on the definition in the present disclosure, the computer-readable medium does not include transitory computer readable media (transitory media), such as a modulated data signal and a carrier.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one" does not exclude other same elements in the process, method, article or device which include the element.

This application can be described in the general context of computer executable instructions executed by a computer, for example, a program module. Generally, the program module includes a routine, a program, an object, a component, a data structure, and the like for executing a particular task or implementing a particular abstract data type. This application can also be practiced in a distributed computing environment in which tasks are performed by remote processing devices that are connected through a communication network. In a distributed computing environment, the program module may be located in both local and remote computer storage media including storage devices.

The embodiments of the present specification are all described in a progressive manner, for same or similar parts in the embodiments, refer to these embodiments, and descriptions of each embodiment focus on a difference from other embodiments. Especially, a system embodiment is basically similar to a method embodiment, and therefore is described briefly; for related parts, reference may be made to partial descriptions in the method embodiment.

The foregoing descriptions are merely embodiments of the present specification and are not intended to limit the present specification. For a person skilled in the art, various modifications and variations can be made to the present specification. Any modification, equivalent replacement, or improvement made without departing from the spirit and principle of the present specification shall fall within the scope of the claims of the present specification.

## Claims

1. A resource transfer verification method, applied to a server and comprising:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result comprising the verification information to the resource transferor.

2. The method according to claim 1, wherein the determining verification information of the transfer comprises:
determining a personalized code corresponding to the resource transferee, the personalized code being preset by the resource transferee; and
determining the personalized code as the verification information.

3. The method according to claim 1, wherein the determining verification information of the transfer comprises:
determining time information when the transfer succeeds; and
determining the time information as the verification information.

4. The method according to claim 2 or 3, wherein the resource transfer request sent by the resource transferor is sent after the resource transferor scanning identification code information of the resource transferee.

5. The method according to claim 4, wherein the identification code information comprises one of the following: a barcode, a QR code, or an AR identification code.

6. A resource transfer verification method, applied to a resource transferor and comprising:
sending a resource transfer request to a server, the resource transfer request being used for requesting transfer of resources of the resource transferor to a resource transferee; and
receiving a resource transfer result from the server that comprises verification information, the verification information being determined by the server after the resources of the resource transferor are transferred to the resource transferee according to the resource transfer request, and the verification information being used for indicating that the transfer succeeds.

7. The method according to claim 6, wherein the sending a resource transfer request to a server comprises:
sending the resource transfer request to the server through scanning identification code information of the resource transferee.

8. The method according to claim 7, wherein the identification code information comprises one of the following: a barcode, a QR code, or an AR identification code.

9. A resource transfer verification method, applied to a resource transferee and comprising:
setting a personalized code; and
sending the personalized code to a server to enable the server to determine the personalized code as verification information after resources of a resource transferor are transferred to the resource transferee, the verification information being used for indicating that the transfer succeeds.

10. The method according to claim 9, wherein the setting a personalized code comprises:
setting the personalized code according to a preset time cycle.

11. An electronic payment verification method, applied to a server and comprising:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result comprising the verification information to the payer.

12. The method according to claim 11, wherein the determining verification information of the electronic payment comprises:
determining a personalized code corresponding to the payee, the personalized code being preset by the payee; and
determining the personalized code as the verification information.

13. The method according to claim 11, wherein the determining verification information of the electronic payment comprises:
determining time information when the electronic payment succeeds; and
determining the time information as the verification information.

14. The method according to claim 12 or 13, wherein the payment request sent by the payer is sent after the payer scanning identification code information of the payee.

15. The method according to claim 14, wherein the identification code information comprises one of the following: a barcode, a QR code, or an AR identification code.

16. An electronic payment verification method, applied to a payer and comprising:
sending a payment request to a server, the payment request being configured to request an electronic payment to a payee; and
receiving a payment result from the server that comprises verification information, the verification information being determined by the server after completing the electronic payment from the payer to the payee according to the payment request, and the verification information being used for indicating that the electronic payment succeeds.

17. The method according to claim 16, wherein the sending a payment request to a server comprises:
sending the payment request to the server through scanning identification code information of the payee.

18. The method according to claim 17, wherein the identification code information comprises one of the following: a barcode, a QR code, or an AR identification code.

19. An electronic payment verification method, applied to a payee and comprising:
setting a personalized code; and
sending the personalized code to a server to enable the server to determine the personalized code as verification information after completing an electronic payment from a payer to the payee, the verification information being used for indicating that the electronic payment succeeds.

20. The method according to claim 19, wherein the setting a personalized code comprises:
setting the personalized code according to a preset time cycle.

21. A resource transfer verification apparatus, applied to a server and comprising:
a receiving module configured to receive a resource transfer request sent by a resource transferor, the resource transfer request being used for requesting transfer of resources of the resource transferor to a resource transferee;
a determining module configured to determine verification information of the transfer after the resources of the resource transferor are transferred to the resource transferee according to the resource transfer request, the verification information being used for indicating that the transfer succeeds; and
a transmitting module configured to transmit a resource transfer result comprising the verification information to the resource transferor.

22. A resource transfer verification apparatus, applied to a server and comprising:
a memory storing a program; and
a processor executing the program stored in the memory to perform operations including:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result comprising the verification information to the resource transferor.

23. A computer-readable storage medium, the computer-readable storage medium storing one or more program instructions that, when executed by an electronic device comprising a plurality of application programs, cause the electronic device to perform operations including:
receiving a resource transfer request sent by a resource transferor, the resource transfer request being used for requesting transfer of resources of the resource transferor to a resource transferee;
determining verification information of the transfer after the resources of the resource transferor are transferred to the resource transferee according to the resource transfer request, the verification information being used for indicating that the transfer succeeds; and
transmitting a resource transfer result comprising the verification information to the resource transferor.

24. A resource transfer verification apparatus, applied to a resource transferor and comprising:
a sending module configured to send a resource transfer request to a server, the resource transfer request being used for requesting transfer of resources of the resource transferor to a resource transferee; and
a receiving module configured to receive a resource transfer result that comprises verification information and that is transmitted by the server, the verification information being determined by the server after the resources of the resource transferor are transferred to the resource transferee according to the resource transfer request, and the verification information being used for indicating that the transfer succeeds.

25. A resource transfer verification apparatus, applied to a resource transferor and comprising:
a memory storing a program; and
a processor executing the program stored in the memory to perform operations including:
sending a resource transfer request to a server, the resource transfer request being used for requesting transfer of resources of the resource transferor to a resource transferee; and
receiving a resource transfer result that comprises verification information and that is transmitted by the server, the verification information being determined by the server after the resources of the resource transferor are transferred to the resource transferee according to the resource transfer request, and the verification information being used for indicating that the transfer succeeds.

26. A computer-readable storage medium, the computer-readable storage medium storing one or more program instructions that, when executed by an electronic device comprising a plurality of application programs, cause the electronic device to perform operations including:
sending a resource transfer request to a server, the resource transfer request being used for requesting transfer of resources of the resource transferor to a resource transferee; and
receiving a resource transfer result from the server that comprises verification information, the verification information being determined by the server after the resources of the resource transferor are transferred to the resource transferee according to the resource transfer request, and the verification information being used for indicating that the transfer succeeds.

27. A resource transfer verification apparatus, applied to a resource transferee and comprising:
a setting module configured to set a personalized code; and
a sending module configured to send the personalized code to a server to enable the server to determine the personalized code as verification information after resources of a resource transferor are transferred to the resource transferee, the verification information being used for indicating that the transfer succeeds.

28. A resource transfer verification apparatus, applied to a resource transferee and comprising:
a memory storing a program; and
a processor executing the program stored in the memory to perform operations including:
setting a personalized code; and
sending the personalized code to a server to enable the server to determine the personalized code as verification information after resources of a resource transferor are transferred to the resource transferee, the verification information being used for indicating that the transfer succeeds.

29. A computer-readable storage medium storing one or more program instructions that, when executed by an electronic device comprising a plurality of application programs, cause the electronic device to perform operations including:
setting a personalized code; and
sending the personalized code to a server to enable the server to determine the personalized code as verification information after resources of a resource transferor are transferred to the resource transferee, the verification information being used for indicating that the transfer succeeds.

30. An electronic payment verification apparatus, applied to a server and comprising:
a receiving module configured to receive a payment request sent by a payer, the payment request being configured to request an electronic payment to a payee;
a determining module configured to determine verification information of the electronic payment after completing the electronic payment from the payer to the payee according to the payment request, the verification information being used for indicating that the electronic payment succeeds; and
a transmitting module configured to transmit a payment result comprising the verification information to the payer.

31. A resource transfer verification apparatus, applied to a server and comprising:
a memory storing a program; and
a processor executing the program stored in the memory to perform operations including:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result comprising the verification information to the payer.

32. A computer-readable storage medium, the computer-readable storage medium storing one or more program instructions that, when executed by an electronic device comprising a plurality of application programs, cause the electronic device to perform operations including:
receiving a payment request sent by a payer, the payment request being configured to request an electronic payment to a payee;
determining verification information of the electronic payment after completing the electronic payment from the payer to the payee according to the payment request, the verification information being used for indicating that the electronic payment succeeds; and
transmitting a payment result comprising the verification information to the payer.

33. An electronic payment verification apparatus, applied to a payer and comprising:
a sending module configured to send a payment request to a server, the payment request being configured to request an electronic payment to a payee; and
a receiving module configured to receive a payment result from the server that comprises verification information, the verification information being determined by the server after completing the electronic payment from the payer to the payee according to the payment request, and the verification information being used for indicating that the electronic payment succeeds.

34. A resource transfer verification apparatus, applied to a payer and comprising:
a memory storing a program; and
a processor executing the program stored in the memory to perform operations including:
sending a payment request to a server, the payment request being configured to request an electronic payment to a payee; and
receiving a payment result from the server that comprises verification information, the verification information being determined by the server after completing the electronic payment from the payer to the payee according to the payment request, and the verification information being used for indicating that the electronic payment succeeds.

35. A computer-readable storage medium storing one or more program instructions that, when executed by an electronic device comprising a plurality of application programs, cause the electronic device to perform operations including:
sending a payment request to a server, the payment request being configured to request an electronic payment to a payee; and
receiving a payment result from the server that comprises verification information, the verification information being determined by the server after completing an electronic payment from the payer to the payee according to the payment request, and the verification information being used for indicating that the electronic payment succeeds.

36. An electronic payment verification apparatus, applied to a payee and comprising:
a setting module configured to set a personalized code; and
a sending module configured to send the personalized code to a server to enable the server to determine the personalized code as verification information after completing an electronic payment from a payer to the payee, the verification information being used for indicating that the electronic payment succeeds.

37. A resource transfer verification apparatus, applied to a payee and comprising:
a memory storing a program; and
a processor executing the program stored in the memory to perform operations including:
setting a personalized code; and
sending the personalized code to a server to enable the server to determine the personalized code as verification information after completing an electronic payment from a payer to the payee, the verification information being used for indicating that the electronic payment succeeds.

38. A computer-readable storage medium storing one or more program instructions that, when executed by an electronic device comprising a plurality of application programs, cause the electronic device to perform operations including:
setting a personalized code; and
sending the personalized code to a server to enable the server to determine the personalized code as verification information after completing an electronic payment from a payer to the payee, the verification information being used for indicating that the electronic payment succeeds.
